# EUROPEAN PATENT SPECIFICATION

(11) **EP 2 343 034 B1**
(45) Date of publication and mention of the grant of the patent: **25.06.2014**
(21) Application number: 09806473.6
(22) Date of filing: 23.07.2009
(51) Int. Cl.: A61H 1/02, B25J 9/00

(54) **ROBOTIC ARM FOR CONTROLLING ARM MOVEMENT**
ROBOTISCHER ARM ZUR STEUERUNG DER ARMBEWEGUNG
BRAS ROBOTISÉ DESTINÉ À COMMANDER LE MOUVEMENT DU BRAS

(30) Priority: 05.08.2008 ES 200802340
(43) Date of publication of application: 13.07.2011
(73) Proprietor: Universidad Miguel Hernandez, 03202 Elche (Alicante) (ES)
(72) Inventor: SABATER NAVARRO, Jose Maria, E-03202 Elche (Alicante) (ES); FERNÁNDEZ JOVER, Eduardo, E-03202 Elche (Alicante) (ES); GARCIA ARACIL, Nicolas Manuel, E-03202 Elche (Alicante) (ES); AZORIN POVEDA, Jose Maria, E-03202 Elche (Alicante) (ES); PEREZ VIDAL, Carlos, E-03202 Elche (Alicante) (ES)
(74) Representative: Temino Ceniceros, Ignacio
(86) International application number: PCT/ES2009/070305
(87) International publication number: WO 2010/018283

(56) References cited:
- WO-A1-2004/058458
- WO-A1-2006/039403
- WO-A2-2006/082584
- US-A1- 2003 073 939
- US-A1- 2003 115 954
- US-A1- 2004 243 027
- US-A1- 2005 101 448
- US-A1- 2008 009 771

## Description

The present invention relates to a robotic arm and more specifically relates to a robotic arm which can be used in upper limb rehabilitation training.

### Background of the invention

In upper limb rehabilitation training, a patient or user trains his or her arms to improve or regain control over them. It is especially used for patients suffering from a partial paralysis. A partial paralysis may be caused by any of a number of common causes: multiple sclerosis, a tumour or an accident. The most common cause of partial paralysis is a stroke. Patients suffering from partial paralysis may benefit from upper limb rehabilitation training in which a physiotherapist may subject a patient's arm repeatedly to a certain movement. Various treatment methods exist. Proprioceptive Neuromuscular Facilitation (PNF) is one such method and aims at stimulating a patient's proprioreceptors. It is possible for a patient to retrain their brain to perform certain movements and in this way regain some functional control over their arms. The best results using this method are normally only obtained when the movement of the arm is repeated at least twice a day for 45 minutes during a month. It is not always possible to give each patient this care during such an extended period.

Robots have been developed to aid in the therapy. A patient's arm is located or connected in a robot arm and this robot arm repeatedly performs a certain movement provoking the same movement in the patient's arm. An example of such a robot is disclosed in WO 2006/058442, which describes a system comprising a plurality of drives. First and second drives determine the position of an upper arm rotation module, the upper arm of a user being fixed by a cuff. The upper arm rotation module is a two-piece structure, and is provided with a third rotation drive for rotating the upper arm cuff. The upper arm rotation module is linked with a wrist rotation module via an elbow rotation module which can be rotated at an angle thereto and is embodied similar to the upper arm rotation module.

Although this system allows a variety of movements to be performed, a need still exists for further improvements that allow the robot to perform more movements an arm can perform. Additionally, the robot should accurately reproduce these movements. Finally, the comfort of the patient and physician in the use of the robot might be improved.

From the state of the art it is known the document WO 2006/039403 which describes a system for use in rehabilitation and/or physical therapy for the treatment of injury or disease. The system can overcome gravity-induced dysfunction in extremity paresis following stroke or other neurological disorders.

Document US2008009771 relates to an exoskeleton, or a wearable robot having joints and links corresponding to those of the human body. The system and method can be used in rehabilitation medicine, virtual reality simulation and teleoperation, and for the benefit or both disables and healthy populations. The present system includes and anthropomorphic seven degree-of-freedom, powered upper body exoskeleton. One example includes proximal placement of drive motors and distal placement of cable-pulley reductions, thus yield-ing low inertia, high stiffness links, and back drivable transmissions with zero backlash.

Nevertheless, that system does not describe means for positioning the user's hand capable of flexing and extending a user's fingers, making possible PNF programs that also target the muscles and joints in the fingers.

### Description of the invention

The present invention aims at providing improvements in at least some of these areas. This aim is achieved with a robotic arm according to claim 1.

In a first aspect, the invention provides a robotic arm for controlling a movement of a user's hand, said robotic arm forming a kinematic chain extending from a proximal to a distal end and comprising a grip for positioning said user's hand at a distal end, characterised in that the kinematic chain possesses redundancy in a distal region, such that the movement of the user's hand can be decoupled from other parts of the kinematic chain.

A patient places his or her hand in the grip provided at the distal end. In this region, redundancy in the kinematic chain is provided, which means that the whole kinematic chain except for the hand grip might perform movements while the hand grip (and thus the patient's hand) does not move. This presents a major improvement in comfort and safety for patients and attending physicians. If a certain movement is to be performed, the kinematic chain can normally be moved to its appropriate position without having to move the hand grip. The patient does not need to change his position or orientation and the robotic arm is able to perform all its movements without hitting the patient or physician.

Preferably, the kinematic chain of the robotic arm contains at least seven degrees of freedom, such that the robotic arm can perform all translations and rotations. Six degrees of freedom are needed to perform all translations and rotations and the seventh degree of freedom provides the redundancy in the distal region of the kinematic chain. Naturally, the kinematic chain may also contain more than seven degrees of freedom, which would provide extra redundancy. Optionally, said kinematic chain comprises seven modules, each module of the kinematic chain adapted to provide a rotation.

Preferably, the robotic arm according to the invention comprises artificial muscle actuators. Artificial muscle actuators have the important advantage of being controlled by a determined force, not by a determined position. This is advantageous because in the interaction with a patient's arm, the loads the arm experiences are often more important than the exact position. PNF training programmes generally comprise exercises for active free movements, active assisted movements, active resisted movement and passive movements. Particularly in active resisted movements, the resistance a patient experiences can more accurately be controlled when using actuators controlled by force, not by position. Naturally, a force applied by the artificial muscle actuators will result in a corresponding movement of a link in the kinematic chain.

Optionally, said artificial muscle actuators are pneumatic artificial muscles. Pneumatic artificial muscles are very light-weight and they show inherent compliant behaviour: when a force is exerted on a pneumatic artificial muscle, it "gives in", without increasing the force in the actuation. Alternatively, suitable electroactive polymers may be used as the artificial muscle actuators.

Preferably, said artificial muscle actuators are used in antagonist/agonist setup to control opposite movements of a joint. The kinematic chain is formed by a number of links connected through joints. To move a joint (and thus the position of the links further down in the kinematic chain), artificial muscle actuators may be used. When a pneumatic artificial muscle is activated, it contracts axially and a pulling force is applied to a load connected to it. The artificial muscle can only provide movement in one direction. By providing sets of artificial muscle actuators in antagonist/agonist setup, one muscle can be activated to provide a movement of a joint in a first direction, while when the other muscle is activated the movement of a joint in the opposite direction is established.

Preferably, the grip for positioning the user's hand comprises a mechanism for flexing and extending a user's fingers. In addition to controlling, provoking or guiding a movement of a patient's arm and hand, the fingers can also be flexed or extended. So, PNF programs that also target the muscles and joints in the fingers can be followed.

Preferably, the robotic arm according to the invention comprises a plurality of sensors for measuring the positions and loads throughout the kinematic chain and a system for registering and storing the data supplied by the plurality of sensors. The sensors need to be placed in appropriate locations. Throughout a movement by the arm of the patient (provoked by a therapist or controlled by the patient himself), the various positions and loads along the kinematic chain can be measured. By registering and storing this data, the system can repeat a movement, without assistance of the patient or a therapist. In rehabilitation training, a physiotherapist may subject the patient's arm to a certain movement. The system registers the exact movement through measuring the loads encountered by the arm and the various positions it moves through. Once registered, the robotic arm may reproduce the same movement without any intervention by a physiotherapist.

Preferably, a sensor capable of measuring torques around three orthogonal axes and forces in three orthogonal directions is provided at the connection of the kinematic chain to the grip. Through this sensor, it can be ensured at all times that torques and forces experienced by patient and robotic arm are always below pre-established threshold levels.

In a second aspect of the present invention, the invention provides a system for upper limb rehabilitation training comprising a robotic arm according to the invention and a second robotic arm for controlling the movement of a user's elbow. The second robotic arm may be used for supporting and guiding a user's elbow, but also for provoking a movement of the same. A physiotherapist, when subjecting a patient's arm to a certain movement would normally grip the patient's arm in two locations. These two locations will normally be at or near the patient's elbow and at or near the patient's hand. The second robotic arm thus aides in more accurately reproducing the movement subscribed by a physiotherapist.

Preferably, the upper limb rehabilitation training system furthermore comprises virtual reality technology. It has been shown that patients can be more successful in their training or their rehabilitation when incentives are used in the training. Virtual reality can provide this kind of incentives. For example, a patient will normally be interested in recovering movements from everyday life such as grabbing an object from a table. Virtual reality can provide an environment, in which the patient may under the control of the robotic arms grab such an object. Virtual reality can also aid in showing that the patient is improving (since grabbing the object is easier).

In another aspect of the invention, the invention provides a method of upper limb training comprising the steps of placing a patient's hand in the grip of a robotic arm according to the invention, said robotic arm comprising a plurality of sensors for measuring the positions and loads throughout the kinematic chain and a system for registering and storing the data supplied by the plurality of sensors, provoking a movement of the patient's upper limb, while the robotic arm registers and stores said movement, and reproduction of the movement by the robotic arm such that the patient's limb performs the same movement repeatedly. Preferably, the patient places his elbow in the grip of a second robotic arm that is used for controlling the movement of a user's elbow.

### Brief description of the drawings

These and further possible embodiments of the invention and their advantages will be explained, only by way of non-limiting example, with reference to the appended figures, in which:
- Figure 1 shows a perspective view of a preferred embodiment of a system for upper limb rehabilitation training according to the present invention;
- Figure 2 shows a perspective view of a detail of the system for upper limb rehabilitation training shown in figure 1;
- Figure 3 shows a perspective view of a preferred embodiment of a robotic arm according to the present invention;
- Figure 4 shows of the robotic arm of figure 3 wherein the outside covers of the various modules of the robotic arm have been removed;
- Figure 5 shows the robotic arm of figure 4 highlighting the degrees of freedom of the robotic arm;
- Figures 6 and 7 show perspective views of the first module of the preferred embodiment of the robotic arm shown in figure 3;
- Figure 8 shows a perspective view of the second module of the preferred embodiment of the robotic arm shown in figure 3;
- Figure 9 shows a perspective view of the third module of the preferred embodiment of the robotic arm shown in figure 3;
- Figure 10 shows a perspective view of the fourth module of the preferred embodiment of the robotic arm shown in figure 3;
- Figure 11 shows a perspective view of the fifth module of the preferred embodiment of the robotic arm shown in figure 3;
- Figure 12 shows a perspective view of the sixth and seventh module of the preferred embodiment of the robotic arm shown in figure 3;
- Figures 13 and 14 show perspective views of a second robotic arm which is part of the system for upper limb rehabilitation training shown in figure 1;
- Figure 15 shows a perspective view of the module supporting a patient's elbow which is part of the second robotic arm shown in figures 13 and 14.

### Preferred embodiment of the invention

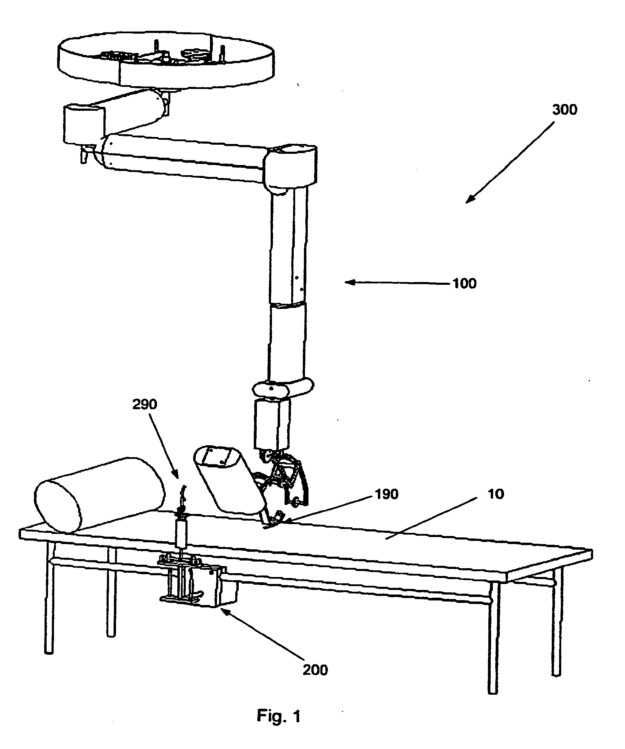

Figure 1 shows a perspective view of a preferred embodiment of a system for upper limb rehabilitation training 300 according to the present invention. A bed, upon which the patient can sit or lie, is indicated with reference sign 10. A preferred embodiment of a robotic arm according to the present invention is indicated with reference sign 100. It comprises a grip for positioning a user's hand 190. This robotic arm 100 comprises a kinematic chain of various modules (which will be explained in more detail later). The kinematic chain comprises a redundancy in the region of the grip for the patient's hand. It should be noted that the robotic arm according to the present invention is not an exoskeletal robot. The only point of contact between the patient and the robotic arm is at grip 190.

The system for upper limb rehabilitation training 300 further comprises a second robotic arm, schematically indicated with reference sign 200. This second robotic arm 200 comprises a grip 290 for placing a user's elbow. When a patient performs a movement (or when the robotic arms perform a movement) the patient's limb is supported at two points: at or near the elbow and at or near the hand. This setup very closely resembles the way a physiotherapist would instruct or train a patient.

The system may further be provided with a virtual reality system. Virtual reality has been shown to aid in rehabilitative training, since it can help a patient to understand the use of certain exercises and can more clearly show to the patient that he or she is improving.

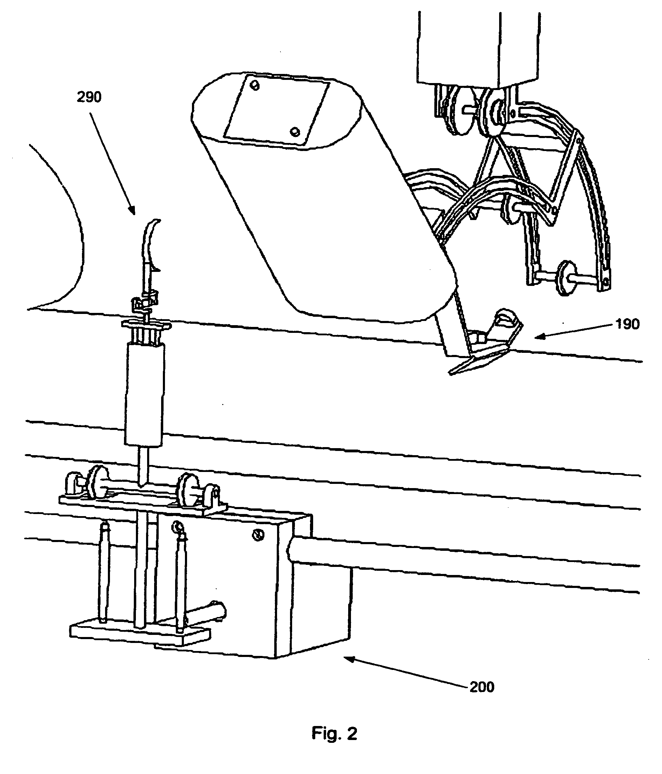

Figure 2 shows a perspective view of a detail of the system for upper limb rehabilitation training 300. It shows a more detailed view of the hand grip 190 and elbow grip 290.

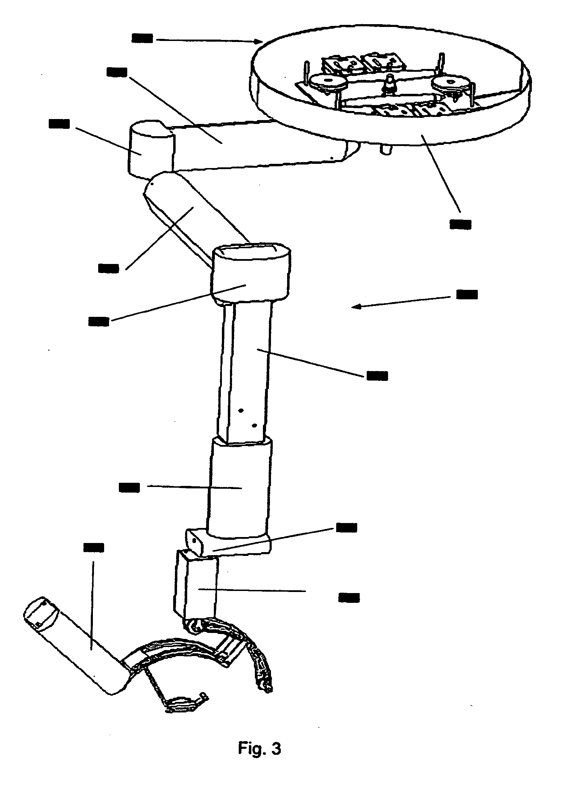

Figure 3 shows a perspective view of a preferred embodiment of a robotic arm 100 according to the present invention. A first module 110 is attached to the ceiling or wall (schematically indicated with reference sign 199). The kinematic chain comprises first module 110, second module 120, third module 130, fourth module 140, fifth module 150, sixth module 160 and seventh module 170. The robotic arm in this preferred embodiment thus comprises seven modules, each module comprising actuators for moving the modules further down the kinematic chain. All modules are connected through joints. Explicitly indicated are joints 125 (joint between the second and third module), 135 (joint between third and fourth module), and 155 (joint between fifth and sixth module).

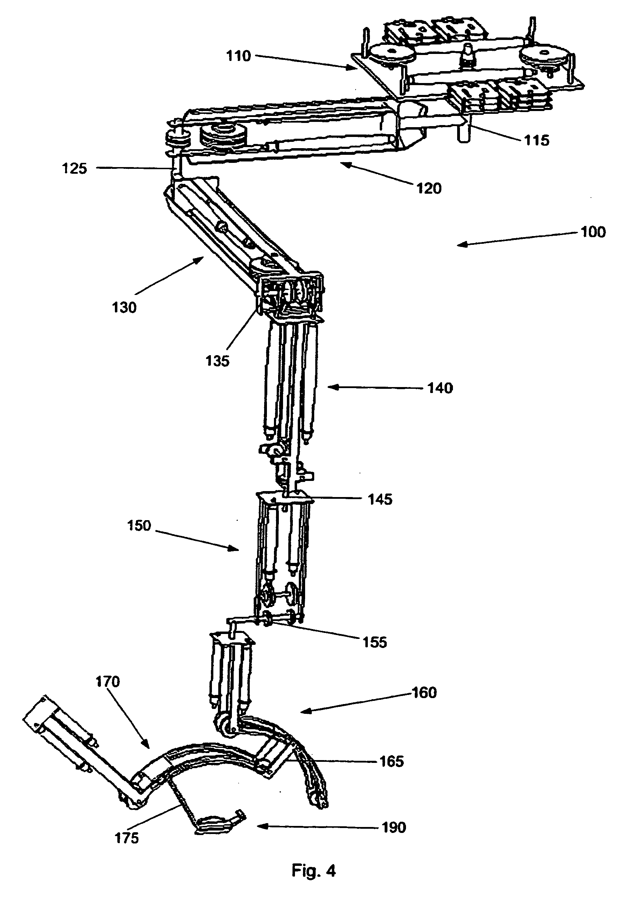

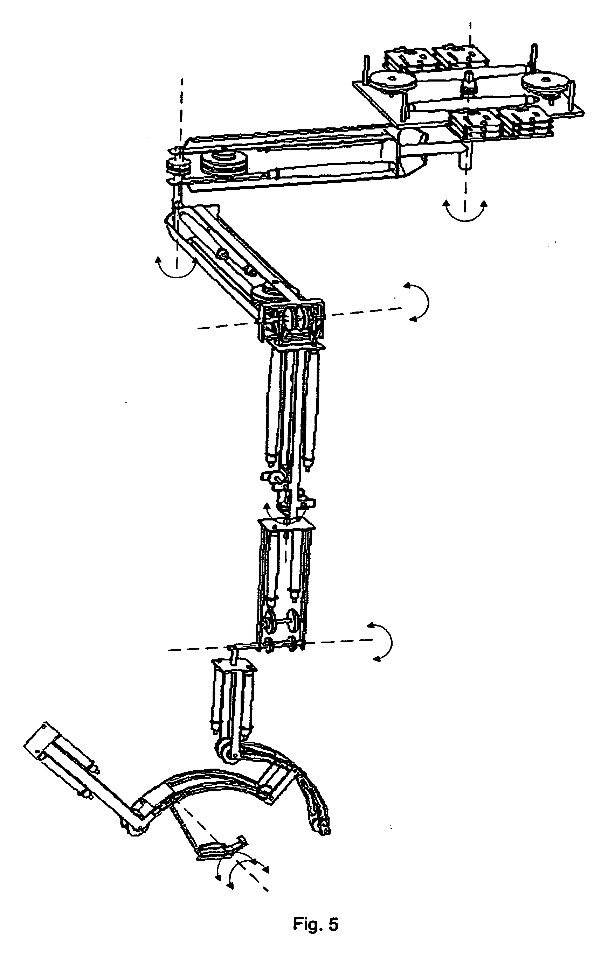

Figure 4 shows the robotic arm 100 wherein the outside covers of the various modules have been removed and figure 5 shows the robotic arm highlighting the degrees of freedom of the robotic arm. First module 110 can provoke a rotation of joint 115. Joint 115 is a shaft which is connected to second module 120, so when the shaft rotates, the second module 120 also rotates. The second module 120 provokes a rotation of joint (shaft) 125 when activated. The rotations provoked by the first and second module are around parallel axes, as indicated in figure 5.

Third module 130 can provoke a rotation of joint (shaft) 135, which connects third module 130 to fourth module 140. This rotation occurs around an axis perpendicular to the axes of rotation of the first two modules. Fourth module 140 controls a rotation around its longitudinal axis of joint (shaft) 145 and actuators in fifth module 150 can rotate joint (shaft) 155 which is connected to sixth module 160. Sixth module 160 controls the movement of joint 165 which results in a rotation of seventh module 170. Through joint 175, the seventh module 170 can provoke a rotation of grip 190, where a patient places his or her hand. The rotations provoked by modules 160 and 170 are around the same axis (as indicated in figure 5). Since the rotations occur around the same axis, the kinematic chain is redundant. The movement of the hand may be largely decoupled from the movement of the other modules of the kinematic chain (through opposite rotation around the same axis) because of this redundancy. In accordance with the invention, the robotic arm may comprise more or less than seven modules, as long as the kinematic chain comprises a redundancy in its distal region such that the movement of the patient's hand can be decoupled from the movement of the rest of the kinematic chain. The use of seven modules allows six degrees of freedom and redundancy.

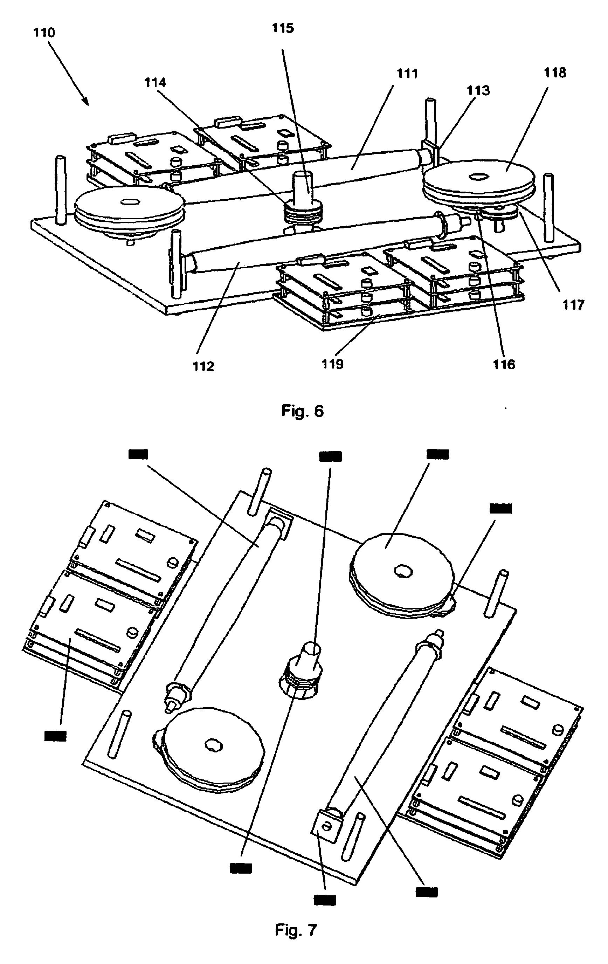

Figures 6 and 7 show perspective views of the first module 110 of the preferred embodiment of the robotic arm shown in figure 3. Module 110 comprises a base plate on which two supports 113 are mounted. Pneumatic artificial muscles 111 and 112 are mounted and can react against supports 113 when actuated. The artificial muscles 111 and 112 in this module are used in antagonist/agonist setup to control opposite movements of a joint. (Similar setups will be described for other modules later). Electronics 119 for control of the robotic arm are provided on first module 110. Electronics 119 can also register and store information provided by sensors in the kinematic chain.

A cable extends from artificial muscle 112 around pulley 117 to pulley 116 and is tied to this pulley 116. Larger pulley 118 is mounted upon and rotates with pulley 116. A cable is provided around pulley 118 and pulley 114, such that rotation of pulley 118 results in a rotation of pulley 114. Pulley 114 is fixed to shaft 115 such that rotation of pulley 114 results in a rotation of shaft 115. In this way, axial contraction of artificial muscle 112 results in a rotation of shaft 115. Because pulley 118 is larger than pulley 116 and pulley 114, a rotation of pulley 116 results in a larger rotation of pulley 114. A corresponding pulley and cable system is provided for artificial muscle 111, but axial contraction of artificial muscle 111 results in a rotation of shaft 115 in the opposite direction. Through the antagonist/agonist setup of the artificial muscles, opposite movements of the joint can be established.

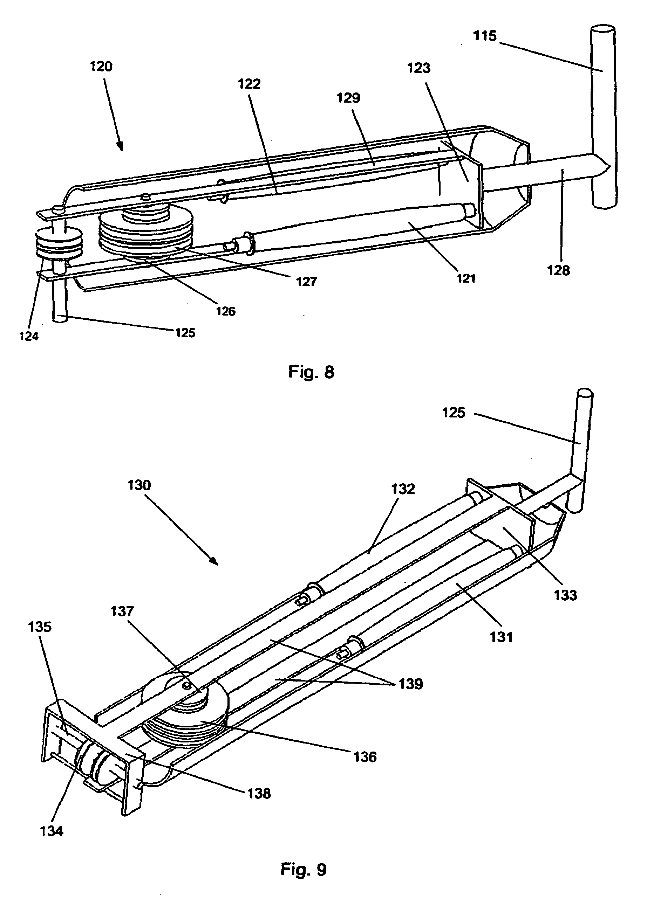

Rotation of shaft 115 results in a rotation of second module 120 (shown in figure 8). Second module 120 is connected through rod 128 to shaft 115 and is orientated perpendicular to this shaft. A support 123 is provided, against which two pneumatic artificial muscles 121 and 122 can react. From support 123, two longitudinal bars 129 extend to the other end of module 120. On these longitudinal bars 129, the shafts for pulleys 124, 126, and 127 are rotationally mounted. When activated, one of the muscles axially contracts pulling on a cable. A cable extends from artificial muscle 121 to pulley 126 and is tied to this pulley. Pulley 127 is mounted upon pulley 126 in such a way that it rotates with it. Another cable is wound around pulley 127 and pulley 124. When smaller pulley 126 is rotated, pulley 127 rotates with it, which in turn rotates pulley 124 and shaft 125. The diameter of pulley 127 is larger than the diameter of pulleys 124 and 126. This causes an increase in the rotation of pulley 124 with respect to the rotation of pulley 126. When muscle 122 contracts, a rotation of shaft 125 in the opposite direction is established through a corresponding system of pulleys.

Third module 130 is rotated by shaft 125. Third module 130 (shown in figure 9) works in a similar way as module 120. It also comprises similar parts, such as artificial muscles 131 and 132, support 133, longitudinal bars 139 and pulleys 136 and 137. The main difference between the two modules is that at the distal end of module 130, a bracket 138 is provided on which shaft 135 with pulley 134 is rotationally mounted in a direction perpendicular to the longitudinal direction of the module.

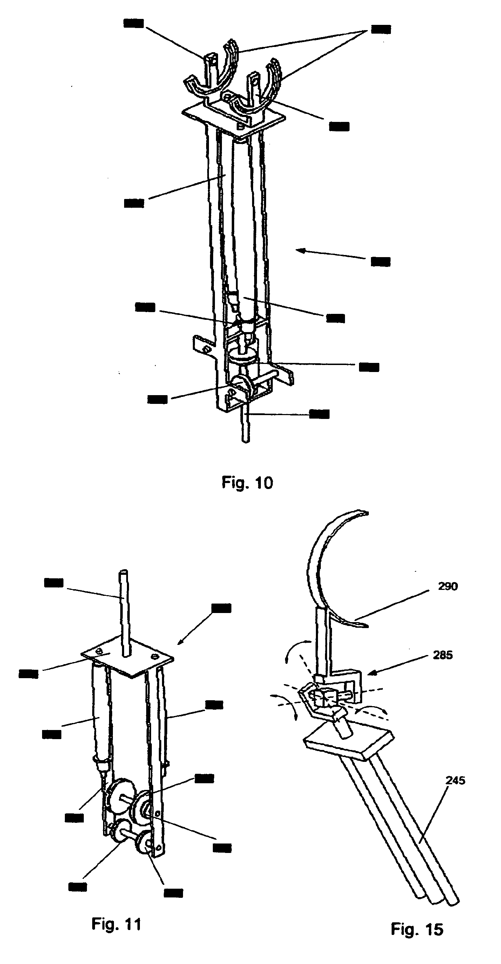

Fourth module 140 (shown in figure 10) comprises bracket 143 with holes 149 for fixedly mounting shaft 135, such that when third module 130 is activated, a rotation of the fourth module 140 is established. Fourth module comprises pneumatic artificial muscles 141 and 142. A pulley 144 is mounted on a shaft 145 extending in the longitudinal direction of module 140. When the muscles are activated, module 140 rotates around its own longitudinal axis. A cable extends from first muscle 141 around pulley 146, to pulley 144 such that axial contraction of first muscle 141 results in a rotation of shaft 145 in a first direction. A second cable extends from second muscle 142 around pulley 147 to pulley 144, in such a way that the activation of second muscle results in a rotation of shaft 145 in a second direction opposite to said first direction. Pulley 144 comprises two grooves such that the two cables no not get tangled. Bracket 143 comprises circular segments 148 with grooves which makes higher rotation angles of module 140 possible by avoiding collision of bracket 143 with bracket 138 of module 130.

The end of shaft 145 is fixed on support 153 of module 150 (shown in figure 11). Rotation of shaft 145 thus results in rotation of module 150. On support 153, two artificial muscles 151 and 152 are mounted. The axial contraction of these muscles results in a rotation of shaft 155. To this end a cable extending from first muscle 151 is wound around and tied to pulley 156. Pulley 157 is mounted upon pulley 156 such that it rotates with it. A cable is wound around pulleys 157 and 154. Pulley 157 has a larger diameter than pulleys 156 and 154 with a corresponding increase of pulley 154 with respect to the rotation of pulley 156. A corresponding pulley and cable system is provided for muscle 152. Axial contraction of muscle 152 results in a rotation of pulley 154 and shaft 155 in a direction opposite to when muscle 152 axially contracts.

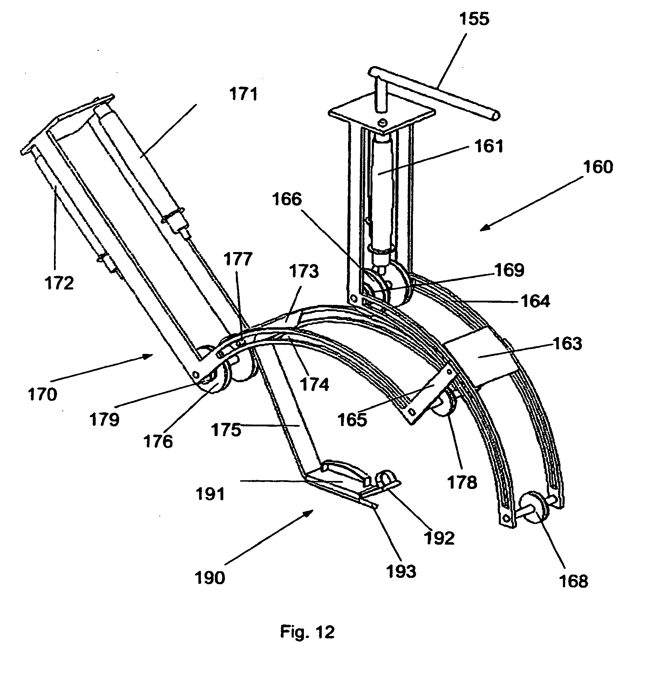

Finally, figure 12 shows that rotation of shaft 155 results in a rotation of sixth module 160. Sixth module 160 is connected to seventh module 170 through joint 165. Sixth and seventh module work in the same way and the way they work will be explained with reference to seventh module 170. Module 170 comprises two artificial muscles 171 and 172. A slide 173 is slidably mounted within a groove 174 extending along the length of the module. To this end, slide 173 carries protrusions 177. Groove 174 extends along a segment of a circle, such that the displacement of the slide 173 within groove 174 results in a rotation of joint 175 around the axis of said circle. A cable from artificial muscle 172 is wound around and tied to pulley 179. Pulley 176 is mounted to rotate with pulley 179. A cable extends from pulley 176 and passes through slide 173 around pulley 178 and is attached to the right side (in figure 12) of slide 173. Axial contraction of artificial muscle 172 thus results in a movement of slide 173 within groove 174 to the right. Pulleys corresponding to pulleys 176 and 179 are provided for muscle 171. A cable from the larger pulley however is fixed to the left side (in figure 12) of slide 173, such that axial contraction of muscle 171 results in a movement of slide 173 to the left. The movement of slide 173 along the cylindrical segment formed by grooves 174 results in rotation of joint (beam) 175 and grip 190 around an axis of said cylinder.

Module 160 works in a similar way as module 170. Activation of muscles 161 and 162 results in a movement of slide 163 along grooves 164 which also form a segment of a cylinder. Activation of muscles 161 and 162 thus results in a rotation of joint 165 and module 170 around the axis of the cylinder. The rotation of joint 165 (and seventh module 170) occurs around the same axis as the rotation of joint 175 (and grip 190). Since the rotations occur around the same axis, the kinematic chain is redundant. The movement of the hand may be largely decoupled from the movement of the other modules of the kinematic chain (through opposite rotation around the same axis) because of this redundancy.

Grip 190 comprises finger support 191 for placing a patient's fingers and thumb support 192 for placing a patient's thumb. Thumb support 192 is hingedly connected to finger support 191. Grip 190 furthermore comprises extension module 193 which is also hingedly connected to finger support 193. Movement of thumb support 192 and extension module 193 allows extension and flexion of fingers and thumb, which can be advantageous for certain patients.

Along the modules of robotic arm 100, various sensors may be provided. Firstly, each joint (or shaft in most cases) between two modules may comprise position sensors which can measure through which angle it has been rotated. In this way, the position of each module is known as a sum of rotations of modules upstream in the kinematic chain. Secondly, power or pressure sensors are provided at each pneumatic artificial muscle. These measure the force the actuators apply. Thirdly a sensor is provided at the distal end of the kinematic chain of the robotic arm, where it connects to grip 190. This sensor measures all torques (around three orthogonal axes) and forces (in three orthogonal directions) between the patient's hand and the robotic arm 100. This way, it can be controlled that torques and forces experienced by patient and robotic arm are always below pre-established threshold levels. Within the scope of the present invention, other sensors may be provided and the sensors may also be located at different points in the kinematic chain. Forces, torques and positions measured by sensors can be registered and stored by electronics 119.

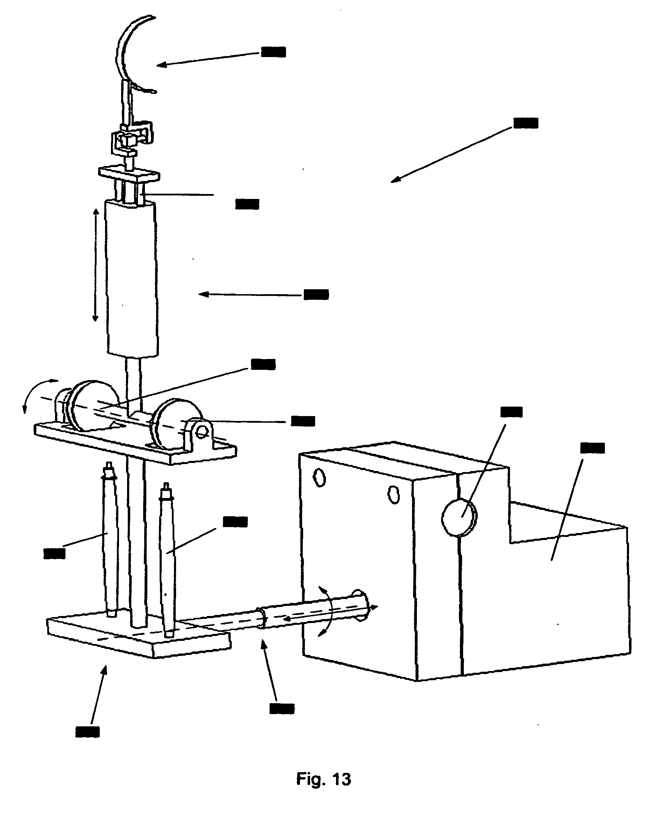

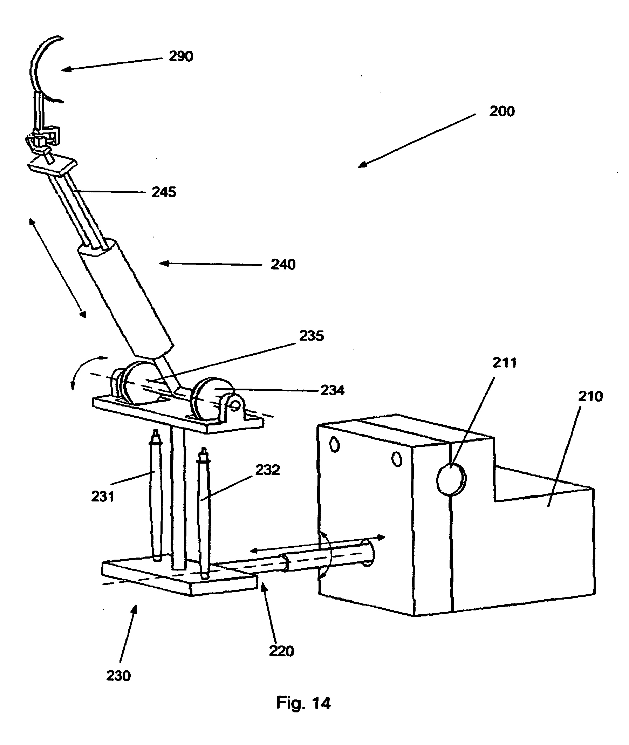

Figures 13 and 14 show perspective views of a second robotic arm which is part of the system for upper limb rehabilitation training shown in figure 1. Second robotic arm 200 comprises a base 210 which comprises a hole 211 for mounting to a bar, which may be part of a bed 10 on which a patient lies (such as indicated in figure 1). A first module 220 may be actuated to rotate along its own longitudinal axis. It further comprises a passive degree of freedom in that it can extend in the direction of its own longitudinal axis to adapt to the body of an individual patient.

Second module 230 comprises two pneumatic artificial muscles 231 and 232 which when actuated provoke a rotation of pulleys 234 mounted on shaft 235. Shaft 235 is the base of module 240, such that if shaft 235 rotates, module 240 also rotates. Module 240 comprises a pneumatic actuator for changing the length of part 245 which forms the basis for elbow grip 290.

The elbow grip does not comprise any further actuators, but it does have three "passive" degrees of freedom (shown in figure 15), provided by a universal joint 285 and an axial rotation. These three passive degrees of freedom are necessary to adapt the movement of the robot to the movement of the elbow.

The system shown in the figures may be used in many kinds of upper limb training, and is especially suitable for upper limb rehabilitation training for patient's suffering from a partial paralysis. In training, a patient may place his hand at the grip of the first robotic arm and his elbow at the grip of the second robotic arm. A method of upper limb training may comprise the steps of placing a patient's hand in the grip of a first robotic, said robotic arm comprising a plurality of sensors for measuring the positions and loads throughout the kinematic chain and a system for registering and storing the data supplied by the plurality of sensors, placing a patient's elbow in a grip of a second robotic arm, provoking a movement of the patient's upper limb, while the robotic arm registers and stores said movement, and reproduction of the movement by the robotic arm such that the patient's limb performs the same movement repeatedly.

## Claims

1. A robotic arm (100) for controlling a movement of a user's arm, said robotic arm forming a kinematic chain extending from a proximal to a distal end and comprising a grip (190) for positioning said user's hand at a distal end, **characterised in that** the kinematic chain possesses redundancy in a distal region, such that the movement of the user's hand can be decoupled from other parts of the kinematic chain; and wherein the grip (190), for positioning the user's hand comprises a mechanism (192, 193) for flexing-and extending a user's fingers and thumb.

2. A robotic arm according to claim 1, **characterised in that** said kinematic chain contains at least seven degrees of freedom, such that the robotic arm can perform all translations and rotations.

3. A robotic arm according to claim 1 or 2, **characterised in that** said kinematic chain comprises seven modules (110,120,130,140,150,160,170), each module of the kinematic chain adapted to provide a rotation.

4. A robotic arm according to any previous claim, **characterised in that** it comprises artificial muscle actuators (111, 112, 121, 122, 131, 132, 141, 142, 151, 152, 161, 162, 171, 172).

5. A robotic arm according to claim 4, **characterised in that** said artificial muscle actuators are pneumatic artificial muscles.

6. A robotic arm according to claim 4 or 5, **characterised in that** said artificial muscle actuators are used in antagonist/agonist setup to control opposite movements of a joint.

7. A robotic arm according to any previous claim, **characterised in that** it comprises a plurality of sensors for measuring the positions and loads throughout the kinematic chain and a system for registering and storing the data supplied by the plurality of sensors.

8. A robotic arm according to claim 7, **characterised in that** a sensor capable of measuring torques around three orthogonal axes and forces in three orthogonal directions is provided at the connection of the kinematic chain to the grip (190).

9. A system (300) for upper limb rehabilitation training comprising a robotic arm (100) according to any previous claim and a second robotic arm (200) for controlling the movement of a user's elbow.

10. A system for upper limb rehabilitation training according to claim 9, **characterised in that** it furthermore comprises virtual reality technology.

## Patentansprüche

1. Roboterarm (100) zur Steuerung der Bewegung des Arms eines Benutzers, der eine kinematische Kette bildet, die sich von einem proximalen zu einem distalen Ende erstreckt und einen Träger (190) umfasst, um die genannte Hand des Benutzers an einem distalen Ende anzuordnen, **dadurch gekennzeichnet, dass** die genannte kinematische Kette an einem distalen Bereich redundant ausgeführt ist, so dass die Bewegung der Hand des Benutzers von anderen Teilen der kinematischen Kette entkoppelt werden kann, wobei der Träger (190) für die Anordnung der Hand des Benutzers einen Mechanismus (192, 193) umfasst, um die Finger und den Daumen des Benutzers zu beugen und zu strecken.

2. Roboterarm nach Anspruch 1, **dadurch gekennzeichnet, dass** die genannte kinematische Kette mindestens sieben Freiheitsgrade aufweist, so dass der Roboterarm alle geradlinigen Bewegungen und Drehungen durchführen kann.

3. Roboterarm nach Anspruch 1 oder 2, **dadurch gekennzeichnet, dass** die genannte kinematische Kette sieben Module (110, 120, 130, 140, 150, 160, 170) umfasst, wobei jedes Modul der kinematischen Kette so ausgelegt ist, dass er eine Drehung ermöglicht.

4. Roboterarm nach einem der vorhergehenden Ansprüche, **dadurch gekennzeichnet, dass** er Aktoren von künstlichen Muskeln (111, 112, 121, 122, 131, 132, 141, 142, 151, 152, 161, 162, 171, 172) umfasst.

5. Roboterarm nach Anspruch 4, **dadurch gekennzeichnet, dass** die genannten Aktoren künstlicher Muskeln pneumatische künstliche Muskeln sind.

6. Roboterarm nach Anspruch 4 oder 5, **dadurch gekennzeichnet, dass** die genannten Aktoren künstlicher Muskeln in einer Antagonist-Agonist-Anordnung eingesetzt werden, um entgegengesetzte Bewegungen eines Gelenks zu steuern.

7. Roboterarm nach einem der vorhergehenden Ansprüche, **dadurch gekennzeichnet, dass** er eine Vielzahl von Detektoren umfasst, um die Positionen und Belastungen in der gesamten kinematischen Kette zu messen und ein System, um die von der Vielzahl von Detektoren gelieferten Daten zu registrieren und zu speichern.

8. Roboterarm nach Anspruch 7, **dadurch gekennzeichnet, dass** ein Detektor bereitgestellt wird, der in der Lage ist, in der Verbindung von der kinematischen Kette zum Träger (190) die Drehmomente in drei senkrecht zueinander stehenden Achsen zu messen sowie die Kräfte in drei senkrecht zueinander stehenden Richtungen.

9. System (300) für die Rehabilitation der oberen Extremitäten, das einen Roboterarm (100) nach einem der vorhergehenden Ansprüche umfasst und einen zweiten Roboterarm (200) zur Steuerung der Bewegung des Ellenbogens des Benutzers.

10. System (300) für die Rehabilitation der oberen Extremitäten nach Anspruch 9, **dadurch gekennzeichnet, dass** es zusätzlich Technologie virtueller Realität umfasst.

## Revendications

1. Bras robotisé (100) qui contrôle le mouvement du bras de l'utilisateur, en formant une chaîne cinématique qui s'étend d'une extrémité proximale à une extrémité distale et qui comprend un support (190) pour situer la main de l'utilisateur dans une extrémité distale; **caractérisé en ce que** cette chaîne cinématique a une redondance sur la zone distale de façon à ce que le mouvement de la main de l'utilisateur puisse se désaccoupler des autres parties de la chaîne cinématique; dans lequel le support (190) où se situe la main de l'utilisateur comprend un mécanisme (192, 193) pour fléchir et étendre les doigts et le pouce de l'utilisateur.

2. Bras robotisé selon la revendication 1, **caractérisé en ce que** cette chaîne cinématique contient, au moins, sept degrés de liberté, de façon à ce que le bras robotisé puisse réaliser toutes les translations et rotations souhaitées.

3. Bras robotisé selon la revendication 1 ou 2, **caractérisé en ce que** cette chaîne cinématique comprend sept modules (110, 120, 130, 140, 150, 160, 170), chaque module de la chaîne cinématique étant adapté pour fournir une rotation.

4. Bras robotisé selon toute revendication précédente, **caractérisé en ce qu'**il comprend des actionneurs des muscles artificiels (111, 112, 121, 122, 131, 132, 141, 142, 151, 152, 161, 162, 171, 172).

5. Bras robotisé selon la revendication 4, **caractérisé en ce que** les actionneurs des muscles artificiels sont des muscles pneumatiques artificiels.

6. Bras robotisé selon la revendication 4 ou 5, **caractérisé en ce que** ces actionneurs des muscles artificiels s'utilisent avec une configuration antagoniste/agoniste afin de contrôler les mouvements opposés d'une articulation.

7. Bras robotisé selon toute revendication précédente, **caractérisé en ce qu'**il comprend plusieurs détecteurs pour mesurer les positions et les charges dans toute la chaîne cinématique et un système pour enregistrer et stocker les données fournies par ces détecteurs.

8. Bras robotisé selon la revendication 7, **caractérisé en ce qu'**il est doté d'un détecteur capable de mesurer les pairs en trois axes orthogonaux et les forces en trois sens orthogonaux dans la connexion de la chaîne cinématique au support (190).

9. Système (300) de rééducation des membres supérieurs comprenant un bras robotisé (100) selon toute revendication précédente et un deuxième bras robotisé (200) afin de contrôler le mouvement du coude de l'utilisateur.

10. Système de rééducation des membres supérieurs selon la revendication 9, **caractérisé en ce qu'**il comprend, en outre, une technologie de réalité virtuelle.
